(19) Europäisches Patentamt

European Patent Office

Office européen des brevets

(11) **EP 0 909 334 B1**

(12) **FASCICULE DE BREVET EUROPEEN**

(45) Date de publication et mention
de la délivrance du brevet:
**24.05.2000 Bulletin 2000/21**

(51) Int Cl.⁷: **C21C 5/52**

(21) Numéro de dépôt: **97927162.4**

(22) Date de dépôt: **10.06.1997**

(86) Numéro de dépôt international:
**PCT/EP97/03005**

(87) Numéro de publication internationale:
**WO 98/01588 (15.01.1998 Gazette 1998/02)**

(54) **PROCEDE DE FABRICATION D'ACIER DANS UN FOUR ELECTRIQUE AVEC ENFOURNEMENT DE FONTE LIQUIDE**

VERFAHREN ZUM HERSTELLEN VON STAHL IN EINEM SCHMELZGESPEISTEN ELEKTRISCHEN OFEN

METHOD FOR MAKING STEEL IN A LIQUID MELT-FED ELECTRIC FURNACE

(84) Etats contractants désignés:
**AT BE DE ES FI FR GB GR IT NL PT SE**
Etats d'extension désignés:
**RO SI**

(30) Priorité: **03.07.1996 LU 88785**

(43) Date de publication de la demande:
**21.04.1999 Bulletin 1999/16**

(73) Titulaire: **PAUL WURTH S.A.**
**1122 Luxembourg (LU)**

(72) Inventeurs:
• **KREMER, André**
**L-3345 Leudelange (LU)**

• **DENIER, Guy**
**F-57070 Metz (FR)**
• **ROTH, Jean-Luc**
**F-57330 Hettange-Grande (FR)**

(74) Mandataire: **Schmitt, Armand et al**
**Office de brevets,**
**Ernest T. Freylinger,**
**234, route d'Arlon,**
**B.P. 48**
**8001 Strassen (LU)**

(56) Documents cités:
**EP-A- 0 240 485         EP-A- 0 630 977**
**DE-A- 2 325 597         DE-A- 4 434 369**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

# Description

La présente invention concerne un procédé de fabrication d'acier dans un four électrique avec enfournement de fonte liquide.

Une grande partie du recyclage de la ferraille est effectuée à l'aide de fours électriques tels que des fours à arc. Ces fours permettent de fondre et de réutiliser la ferraille ainsi traitée pour fabriquer de nouveaux produits en acier.

Un certain nombre d'éléments résiduels contenus dans la ferraille tels que le cuivre, le nickel, etc., ne peuvent être séparés de l'acier et se retrouvent par conséquent dans les produits finis. C'est ainsi que plus la ferraille subit d'opérations de recyclage, plus la concentration de ces éléments résiduels est importante. Ces derniers constituent une gêne pour la fabrication de certains produits tels que les tôles, etc.

Un moyen de diminuer la concentration en éléments résiduels dans l'acier obtenu à partir de ferraille et d'améliorer en même temps les performances énergétiques du four électrique consiste à ajouter de la fonte liquide dans le four électrique. Or, dû à la teneur assez élevée en carbone et en silicium de la fonte liquide (typiquement 4,5% C et 0,6% Si), un enfournement de fonte mène à une augmentation considérable de la teneur en ces éléments du bain métallique. Il en résulte une phase d'affinage du bain métallique plus longue pour réduire la teneur en C et en Si du bain métallique à des valeurs cibles, qui sont en général très petites, p.ex. pour la teneur en C entre 0.05% et 0.1%.

Pour cela, on procède dans les procédés d'enfournement traditionnels, après l'enfournement de la fonte, à une injection de gaz d'affinage, par exemple d'oxygène, pour réduire les teneurs en C et en Si. Les teneurs en ces éléments étant assez élevées, le débit d'oxygène doit être modéré afin d'éviter que les réactions de désiliciation et de décarburation ne s'effectuent trop violemment. En effet, en présence de teneurs en C et Si élevées, l'oxygène injecté réagit très violemment à l'endroit d'impact dans le bain métallique, ce qui entraîne localement une libération très brusque d'énergie et de gaz de réaction, comme p.ex. du CO. Il est évident qu'une aussi violente réaction est accompagnée de projections d'acier et de fonte qui risquent d'encrasser et d'endommager les panneaux de refroidissement revêtant l'intérieur du four. D'où la nécessité de diminuer le débit d'oxygène afin de modérer la dynamique de la réaction d'affinage.

Cependant, dû au débit limité d'oxygène lors de l'affinage, la durée de ce dernier est assez élevée et, au-delà d'une certaine quantité de fonte liquide enfournée, elle constitue le facteur limitant pour la durée d'un cycle de fusion du four. Afin d'améliorer les performances de productivité du four à arc, c.-à-d. afin de réduire la durée d'un cycle de fusion, il est donc indispensable de réduire la durée de l'affinage du bain métallique.

Le document EP-A-0 630 977 décrit un procédé de traitement de fonte liquide dans un convertisseur équipé d'au moins une électrode. Il s'agit d'un procédé, dans lequel la quantité totale de fonte est présente dans le convertisseur avant que l'arc électrique n'est démarré.

L'objet de la présente invention est de proposer un procédé de fabrication d'acier dans un four électrique avec enfournement de fonte liquide, qui permet de réduire la durée d'un cycle de fusion.

Conformément à l'invention, cet objectif est atteint par un procédé de fabrication d'acier dans un four électrique, dans lequel une quantité de ferraille est enfournée dans le four électrique et fondue à l'aide d'un arc électrique, une quantité déterminée de fonte liquide est enfournée dans le four électrique après qu'une partie de la ferraille est fondue, et un gaz d'affinage est injecté dans le four après l'enfournement de la quantité prévue de fonte jusqu'à ce qu'une valeur cible de la teneur en C et/ou en Si du bain métallique soit atteinte. La quantité de fonte liquide est enfournée en continu et à débit contrôlé sans interruption du chauffage par l'arc électrique, et l'injection du gaz d'affinage dans le four commence durant l'enfournement en continu, avant que la teneur en C et/ou en Si du bain métallique n'ait atteint une valeur limite déterminée, l'injection ayant lieu en continu jusqu'à la fin de l'enfournement.

Ce procédé présente premièrement l'avantage que l'enfournement se fait sous puissance, c'est-à-dire sans interruption du chauffage par l'arc électrique. Par conséquent, la fusion de la ferraille n'est pas interrompue et est réalisée plus rapidement que dans les procédés traditionnels d'enfournement de fonte liquide. Deuxièmement l'affinage par injection d'un gaz commence avant la fin de l'enfournement, c'est-à-dire à un moment qui est avancé par rapport aux procédés d'enfournement traditionnels. Il en résulte que la durée d'un cycle de fusion est réduit, même si le débit d'injection du gaz n'est pas augmenté.

L'affinage commençant avant la fin de l'enfournement, ce procédé permet en outre de réduire la teneur maximale en C et/ou en Si du bain métallique au cours d'un cycle de fusion par une adaptation des débits d'enfournement et d'injection de gaz. En effet, au début de l'affinage la teneur p.ex. en C du bain métallique est nettement inférieure à celle qu'on obtient dans les procédés traditionnels dans lesquels l'affinage ne commence qu'après l'enfournement de la quantité totale de fonte liquide (il en est de même pour la teneur en Si). De plus, une partie au moins du C est oxydé du bain au fur et à mesure de son apport de sorte que l'augmentation de la teneur en C du bain métallique avec l'enfournement est substantiellement réduite et que sa concentration ne dépasse pas une valeur limite déterminée, qui est pour la teneur en C p.ex. inférieure à 2%, de préférence inférieure à 1,5%. La teneur en Si présente un comportement pareil, mais à une échelle réduite. La valeur limite déterminée pour la teneur en Si est p.ex. inférieure à 0,3%, de préférence inférieure à 0,2%.

Les teneurs en C et en Si étant limitées de cette manière, on peut augmenter le débit d'oxygène sans que la réaction d'affinage ne s'effectue trop violemment. En effet, du fait d'un apport local de Si et C limité, la réaction d'affinage n'est plus localisée à l'endroit d'impact du gaz dans le bain mais l'oxygène se porte intermédiairement sur le fer. Suite au brassage des phases en présence (métal et laitier), l'oxyde de fer ainsi produit réagit ultérieurement avec le Si et le C qu'il rencontre ailleurs qu'au point d'injection. La libération de gaz de réaction, comme p.ex. du CO, et les projections se produisent donc de manière plus uniforme sur toute la surface du bain métallique et par conséquent beaucoup moins violemment. Ainsi une augmentation du débit d'oxygène et par conséquent de la vitesse d'affinage est réalisable sans provoquer de projections d'acier et de fonte trop importantes qui risquent d'encrasser et d'endommager les panneaux de refroidissement revêtant l'intérieur du four. Les cycles de fusion du four sont donc abrégées et la productivité du four augmente.

Il est à noter que l'enfournement de la fonte est réalisé sans interruption du chauffage par l'arc électrique et que la voûte du four doit rester fermée pendant la durée de l'enfournement. Celui-ci se fait de préférence à travers une ouverture latérale dans le four. La voûte étant fermée pendant tout le cycle de fusion, les entrées d'air dans l'enceinte du four sont évitées et l'apport d'azote est considérablement réduit. En plus, l'affinage précoce et en continu conduit à un lavage continuel du bain métallique par les gaz de réaction, comme le CO. Par ce lavage par le CO, l'azote dissous dans le bain métallique se dissout dans les bulles de CO qui le font sortir du bain métallique. L'azote est ensuite éliminé de l'enceinte ensemble avec le gaz de réaction par le système d'échappement du four. Un tel lavage en continu conduit donc à des teneurs d'azote très basses de l'acier produit.

Il en résulte que le procédé selon l'invention est parfaitement adapté pour la fabrication d'aciers de qualité, notamment pour des aciers très ductiles, pour lesquels des teneurs très basses en azote sont requises.

Les débits du gaz d'affinage et d'enfournement de fonte sont de préférence adaptés de manière à ce que la teneur en C et/ou en Si du bain métallique n'augmente plus après le début de l'affinage. On peut par exemple ajuster le débit d'enfournement de la fonte au débit d'oxygène maximal de façon à oxyder tout le carbone du bain au fur et à mesure de son apport. De cette manière les teneurs en C et en Si du bain métallique peuvent être contrôlées de façon très précise au cours d'un cycle de fusion du four et il est possible de limiter la teneur maximale à des valeurs très petites, p.ex. pour le C une teneur de 0.5 %.

Selon une exécution préférée du procédé, le gaz d'affinage est injecté dans un des deux quadrants du four, qui sont opposés à l'ouverture d'enfournement par rapport à une électrode du four électrique. Dans ce cas, la direction d'injection du gaz est orienté de sorte qu'un premier plan vertical contenant la direction d'enfournement et un deuxième plan vertical contenant la direction d'injection se coupent essentiellement dans la région de l'électrode du four.

Les gaz de réaction, comme p.ex. le CO, qui sont libérés durant l'affinage en continu sont plus abondants dans la région de rencontre des flux de gaz et de fonte que dans les régions environnantes. En sortant du bain métallique, ces gaz déplacent l'azote dans l'enceinte et créent au dessus de la surface du bain métallique une atmosphère protectrice contre l'entrée d'azote dans le bain.

A cause des températures très élevées dans le voisinage de l'arc électrique, la présence d'azote dans cette région conduit de manière privilégiée à une nitruration du bain métallique. Il est donc très favorable de diriger les flux de fonte et de gaz d'affinage de manière à ce qu'ils se rencontrent dans la région située en dessous de l'arc électrique. L'atmosphère protectrice créée dans le voisinage de l'arc électrique est par conséquent particulièrement dense et une entrée d'azote dans le bain peut être empêchée de manière très efficace.

Il est à noter que la fonte liquide peut être enfournée en une quantité comprise entre 20% et 60% de la charge totale du four et que le débit d'enfournement de la fonte est de préférence inférieur à 4% de la capacité du four par minute. Le débit d'injection d'oxygène par tonne de capacité du four est avantageusement compris entre 0,5 et 1 m$^3$ O$_2$ par minute.

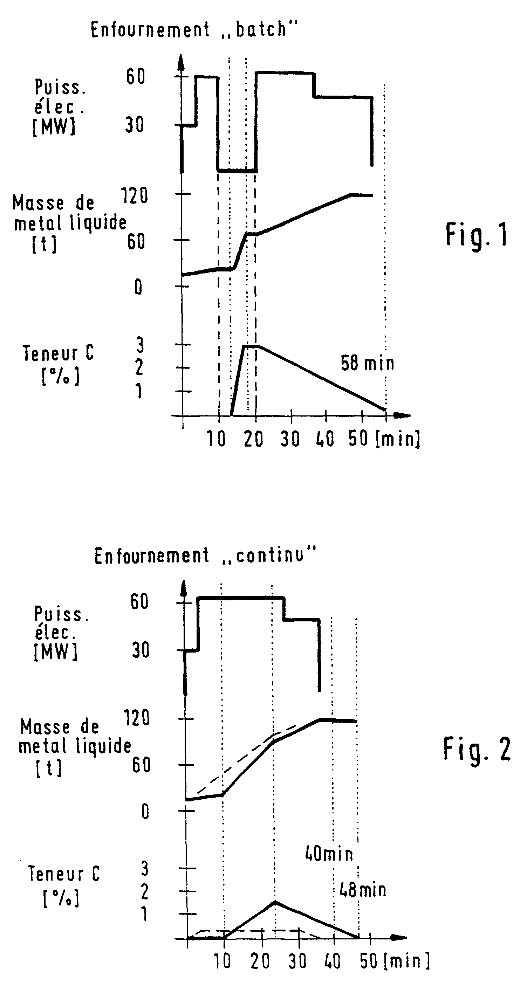

Par la suite, un mode d'exécution du procédé est comparé à un procédé d'enfournement traditionnel à l'aide d'un exemple qui est illustré par les figures 1 et 2. Celles ci montrent:

Fig.1: les variations de la puissance électrique, de la quantité de métal liquide et de la teneur en C avec le temps pour un procédé d'enfournement traditionnel;

Fig.2: les variations de la puissance électrique, de la quantité de métal liquide et de la teneur en C avec le temps pour un procédé d'enfournement selon l'invention.

Les hypothèses communes pour les deux procédés d'enfournement de fonte liquide sont les suivantes:

- capacité du four: 100 t + 20 t pied de bain;
- enfournement: 66 t ferraille + 44 t fonte liquide, soit 40%;
- puissance active maximale du four: 60 MW
- teneur en C de la fonte 4,5%, de la ferraille 0,5%.

Dans cet exemple, seule la teneur en C du bain métallique est considérée. La teneur en Si présente un comportement essentiellement pareil à la teneur en C, sauf que le Si s'oxyde avant le C. Il en résulte qu'après avoir atteint la valeur cible de la teneur en carbone, le silicium est pratiquement éliminé du bain métallique.

En vue de faciliter la comparaison, on part d'abord d'un même débit d'oxygène maximal pour les deux procédés, qui est de l'ordre de 4000 m³/h et qui correspond à un débit de décarburation de 60 kg C/min.

Dans le procédé traditionnel (fig. 1), le four électrique est d'abord mis sous puissance maximale pour fondre une certaine quantité de ferraille. Après dix minutes, l'arc électrique est à nouveau éteint, le couvercle du four est enlevé et on enfourne la fonte liquide pendant 5 minutes. Après l'enfournement, le couvercle du four est remis en place et l'arc est rallumé. On remarque qu'à cause du temps nécessaire à l'ouverture et à la fermeture du couvercle du four, un enfournement de 5 minutes entraîne un arrêt du four pendant approximativement 10 minutes.

Pendant l'enfournement de la fonte, la masse de métal liquide et la teneur en C du bain métallique augmentent de manière linéaire en raison du débit d'enfournement, et à la fin de l'enfournement, la teneur en C atteint une valeur de 3% (la teneur en Si s'élève à 0,4%). C'est notamment en raison de ces teneurs très élevée en Si et en C qu'il faut limiter le débit d'oxygène lors de l'affinage au débit de 4000 m³/h. Pendant cet affinage, qui débute après la fermeture du couvercle, la teneur en C est réduite de manière substantiellement linéaire pour aboutir à une valeur inférieure à 0,1%.

Il est à noter qu'en raison de la quantité de C enfournée avec la fonte et la ferraille et en raison du débit limité d'oxygène, la décarburation dure en tout 38 minutes. Parce qu'elle ne commence que 20 minutes après le début du cycle de fusion, le cycle de fusion entier dure 58 minutes.

Dans le procédé selon l'invention, illustré à l'aide de la fig. 2, l'enfournement commence après 10 minutes en continu et à un débit de 3 t/min, soit sur une durée d'environ 15 minutes. Pendant l'enfournement, le four reste sous puissance, de sorte que la quantité de métal liquide du four augmente non seulement en raison de l'enfournement mais également en raison de la fusion simultanée de ferraille. Par conséquent, la fusion de la ferraille se termine 10 minutes plus tôt que dans le procédé de la fig. 1.

De plus, la décarburation, qui nécessite 38 minutes pour le même débit de 4000 m³/h, commence peu après le début de l'enfournement avant que la teneur en C du bain métallique ne dépasse une valeur de 1,5%. Ce début anticipé par rapport au procédé de la fig. 1 permet déjà de réduire la durée du cycle de fusion de plus de 10%. Si on augmente maintenant le débit maximal d'oxygène, ce qui est possible sans risque de projections à cause de la faible teneur en C du bain métallique, la vitesse de décarburation augmente et la durée d'un cycle de fusion est davantage réduite. Il en résulte que le procédé selon l'invention permet d'améliorer la productivité d'un four électrique d'au moins 10%.

Dans une version optimisée de l'enfournement continu de fonte, on peut ajuster le débit d'enfournement de la fonte au débit d'oxygène de décarburation maximal, de façon à oxyder le C au fur et à mesure de son apport dans le bain métallique. De cette manière, il est possible de limiter la teneur en C à des valeurs inférieures à 0,5%. En raison de cette faible teneur en C, on peut augmenter considérablement le débit maximal d'oxygène, de façon à augmenter la vitesse de décarburation. Pour une fonte d'une teneur de 4,5% en C, la relation entre le débit de fonte et le débit d'oxygène est alors:

$$q\ fonte(t/min) = q\ O_2\ (m^3/min)/43$$

Un tel procédé avec enfournement anticipé et optimisé est représenté en pointillé sur la fig. 2 pour un débit maximal d'oxygène de 5200 m³/h. L'enfournement se fait dans ce cas à un débit de 2 t/min. On voit que l'enfournement commence dès le début du cycle et que par conséquent, la masse de métal liquide croît de manière linéaire dès le début. La teneur en C par contre reste substantiellement constante pendant tout l'enfournement et inférieure à 0,5%. Ce procédé permet de gagner 20% de productivité par rapport aux procédés d'enfournement traditionnels.

**Revendications**

1. Procédé de fabrication d'acier dans un four électrique, dans lequel

   une quantité de ferraille est enfournée dans le four électrique et fondue à l'aide d'un arc électrique,
   une quantité déterminée de fonte liquide est enfournée dans le four électrique après qu'une partie de la ferraille est fondue, et
   un gaz d'affinage est injecté dans le four après l'enfournement de la quantité prévue de fonte jusqu'à ce qu'une valeur cible de la teneur en C et/ou en Si du bain métallique soit atteinte,

   **caractérisé** en ce que

   la quantité de fonte liquide est enfournée en continu et à débit contrôlé sans interruption du chauffage par l'arc électrique, et
   l'injection du gaz d'affinage dans le four commence durant l'enfournement en continu de la fonte liquide, avant que la teneur en C et/ou en Si du bain métallique n'ait atteint une valeur limite déterminée, l'injection ayant lieu en continu jusqu'à la fin de l'enfournement.

2. Procédé selon la revendication 1, caractérisé en ce que le débit d'enfournement et le débit d'injection du gaz d'affinage sont adaptés de manière à ce que la teneur en C et/ou en Si du bain métallique n'augmente plus après le début de l'affinage.

3. Procédé selon l'une des revendications précédentes, caractérisé en ce que le gaz d'affinage est injecté dans un des deux quadrants du four, qui sont opposés à l'ouverture d'enfournement par rapport à une électrode du four électrique, la direction d'injection du gaz étant orienté de sorte qu'un premier plan vertical contenant la direction d'enfournement et un deuxième plan vertical contenant la direction d'injection se coupent essentiellement dans la région de l'électrode du four.

4. Procédé selon l'une des revendications précédentes, caractérisé en ce que la valeur limite de la teneur en C du bain métallique est inférieure à 2%, de préférence inférieure à 1,5%.

5. Procédé selon l'une des revendications précédentes, caractérisé en ce que la fonte liquide est enfournée en une quantité comprise entre 20% et 60% de la charge totale du four.

6. Procédé selon l'une des revendications précédentes, caractérisé en ce que le débit d'enfournement de la fonte est inférieur à 4% de la capacité du four par minute.

7. Procédé selon l'une des revendications précédentes, caractérisé en ce que le débit d'injection d'oxygène $O_2$ par tonne de capacité du four est compris entre 0,5 et 1 $m^3$/min.

**Patentansprüche**

1. Verfahren zum Herstellen von Stahl in einem Elektroofen, bei dem:

der Elektroofen mit einer Menge an Schrott beschickt wird, der mittels eines elektrischen Lichtbogens geschmolzen wird,

der Elektroofen mit einer vorbestimmten Menge an flüssigem Gußeisen beschickt wird, nachdem ein Teil des Schrotts geschmolzen ist, und

nach der Beschickung mit der vorgesehenen Menge an Gußeisen ein Frischgas in den Ofen eingeleitet wird, bis ein Zielwert des Gehalts an C und/oder Si des Metallbades erreicht ist,

dadurch **gekennzeichnet**, daß

die Beschickung mit der Menge an flüssigem Gußeisen fortlaufend und mit einem kontrollierten Durchsatz ohne Unterbrechung der Heizung durch den elektrischen Lichtbogen stattfindet, und

das Einleiten des Frischgases in den Ofen während der fortlaufenden Beschickung mit flüssigem Gußeisen beginnt, bevor der Gehalt an C und /oder an Si des Metallbades einen bestimmten Grenzwert erreicht, wobei das Einleiten bis zum Ende des Beschickens fortlaufend stattfindet.

2. Verfahren nach Anspruch 1, dadurch gekennzeichnet, daß der Beschikkungsdurchsatz und der Frischgas-Einlaßdurchsatz so eingestellt werden, daß der Gehalt an C und/oder Si des Metallbades nach dem Beginn des Frischens nicht mehr zunimmt.

3. Verfahren nach einem der vorhergehenden Ansprüche, dadurch gekennzeichnet, daß das Frischgas in einem der beiden Quadranten des Ofens eingeleitet wird, die der Beschickungsöffnung bezüglich einer Elektrode des Elektroofens gegenüberliegen, wobei die Einleitrichtung des Gases so ausgerichtet ist, daß eine die Beschickungsrichtung enthaltende erste vertikale Ebene und eine die Einleitungsrichtung enthaltende zweite vertikale Ebene sich im wesentlichen im Bereich der Elektrode des Ofens schneiden.

4. Verfahren nach einem der vorhergehenden Ansprüche, dadurch gekennzeichnet, daß der Grenzwert des Gehalts an C des Metallbades kleiner als 2%, vorzugsweise kleiner als 1,5% ist.

5. Verfahren nach einem der vorhergehenden Ansprüche, dadurch gekennzeichnet, daß die Beschikkung mit flüssigem Gußeisen in einer Menge stattfindet, die zwischen 20% und 60% der Gesamtbeschickung des Ofens liegt.

6. Verfahren nach einem der vorhergehenden Ansprüche, dadurch gekennzeichnet, daß der Beschikkungsdurchsatz des Gußeisens kleiner als 4% der Kapazität des Ofens pro Minute ist.

7. Verfahren nach einem der vorhergehenden Ansprüche, dadurch gekennzeichnet, daß der Einleitungsdurchsatz an Sauerstoff $O_2$ pro Tonne der Kapazität des Ofens zwischen 0,5 und 1$m^3$/min liegt.

**Claims**

1. Method of producing steel in an electric furnace, in which

a quantity of scrap is charged into the electric furnace and molten by use of an electric arc;

a predetermined quantity of molten pig iron is charged into the electric furnace after a part of the scrap is molten;

and a refining gas is injected into the furnace after the planned quantity of pig iron is charged until a target value of the concentration of carbon and/or silicon in the metal bath is reached,

**characterised in that**

the quantity of molten pig iron is charged continuously and at a controlled rate without interruption of the heating by the electric arc, and

the injection of a the refining gas into the furnace starts during the continuous charging of the pig iron, before the concentration of carbon and/or of silicon in the metal bath has reached a predetermined limiting value, the injection taking place continuously until the end of the charging.

2. Method according to Claim 1, characterised in that the rate of charging and the rate of injection of the refining gas are adjusted so that the carbon and/or silicon concentration in the metal bath no longer increases after the start of the refining.

3. Method according to one of the preceding claims, characterised in that the refining gas is injected into one of the two quadrants of the furnace which are opposite the feed opening relating to an electrode of the electric furnace, the direction of injection of the gas being such that a first vertical plane containing the direction of charging and a second vertical plane containing the direction of injection intersect each other substantially in the region of the furnace electrode.

4. Method according to one of the preceding claims, characterised in that the limiting value of the carbon concentration in the metal bath is less than 2%, preferably less than 1.5%.

5. Method according to one of the preceding claims, characterised in that the charging with molten pig iron is carried out with an amount lying between 20% and 60% of the total charge of the furnace.

6. Method according to one of the preceding claims, characterised in that the rate of the charging with pig iron is less than 4% of the capacity of the furnace per minute.

7. Method according to one of the preceding claims, characterised in that the rate of injection of the ox-

ygen $O_2$ per tonne of the capacity of the furnace lies between 0.5 and 1 $m^3$/min.

Enfournement „batch"

Fig. 1

Enfournement „continu"

Fig. 2